# EUROPEAN PATENT SPECIFICATION

(11) **EP 4 611 363 B1**
(45) Date of publication and mention of the grant of the patent: **07.10.2026**
(21) Application number: 24784072.1
(22) Date of filing: 20.03.2024
(51) Int. Cl.: H04N 9/31, G02B 27/00, G02B 27/09, G03B 21/20

(54) **METHOD AND APPARATUS FOR ADJUSTING BRIGHTNESS OF PROJECTION APPARATUS AND STORAGE MEDIUM**
VERFAHREN UND VORRICHTUNG ZUR EINSTELLUNG DER HELLIGKEIT EINER PROJEKTIONSVORRICHTUNG UND SPEICHERMEDIUM
PROCÉDÉ ET APPAREIL DE RÉGLAGE DE LUMINOSITÉ D'APPAREIL DE PROJECTION ET SUPPORT DE STOCKAGE

(30) Priority: 06.04.2023 CN 202310363233
(43) Date of publication of application: 03.09.2025
(73) Proprietor: XGIMI Technology Co., Ltd., Chengdu, Sichuan 610000 (CN)
(72) Inventor: YANG, Xinpeng, Chengdu, Sichuan 610041 (CN)
(74) Representative: ZBM Patents - Zea, Barlocci & Markvardsen
(86) International application number: PCT/CN2024/082747
(87) International publication number: WO 2024/207987

(56) References cited:
- CN-A- 105 911 807
- CN-A- 105 911 807
- CN-A- 109 698 948
- CN-A- 110 798 671
- CN-A- 114 114 816
- JP-A- 2004 128 575
- US-A1- 2017 208 303
- US-A1- 2019 072 842
- US-A1- 2020 106 999
- US-A1- 2022 408 065

## Description

### TECHNICAL FIELD

The application belongs to the field of optics, and in particular, relates to a method and apparatus for adjusting brightness of a projection apparatus, and a storage medium.

### BACKGROUND

A projection apparatus is a device that may project images or videos onto a screen and may be widely used in various places. Since different places have different ambient brightness, in order to ensure that the brightness of the projection image projected by the projection apparatus meets requirements, a brightness adjustment operation may be performed on the projection apparatus to adjust the brightness of the projection image.

However, in actual operations, it has been found that after the brightness of the projection apparatus is adjusted, color deviation may occur in the projection image projected by the projection apparatus, which degrades the display effect of the projection image of the projection apparatus.

Document US 2019/072842 A1 discloses a display device including a display panel, a touch panel, a cover member, a first adhesive layer, and a second adhesive layer. The display panel has a display surface. The touch panel is provided on the display surface side of the display panel. The cover member is provided on the touch panel. The first adhesive layer is provided between the display panel and the touch panel. The second adhesive layer is provided between the touch panel and the cover member. The first adhesive layer has a first Young's modulus. The second adhesive layer has a second Young's modulus that is higher than the first Young's modulus.

Document US 2022/408065 A1 discloses a display panel, a method for manufacturing the display panel, and a display apparatus are provided. The display panel includes a display region and a non-display region surrounding the display region; a substrate; a light-emitting device disposed on the substrate and in the display region; and an encapsulation layer disposed on a side of the light-emitting device away from the substrate. The encapsulation layer includes a first inorganic encapsulation layer, an organic encapsulation layer disposed on a side of the first inorganic encapsulation layer away from the substrate, and a second inorganic encapsulation layer disposed on a side of the organic encapsulation layer away from the substrate. The organic encapsulation layer includes a first block copolymer; and the first block copolymer comprises a hydrophobic block and an ultraviolet absorption block.

Document CN 105 911 807 A provides a display panel and a display device. The display panel comprises an array substrate, a color filter substrate and a liquid crystal layer located between the array substrate and the color filter substrate, wherein the color filter substrate comprises a transparent substrate, a black matrix arranged on the transparent substrate and a color filter layer, the black matrix comprises a plurality of first light-shielding strips extending along a first direction and a plurality of second light-shielding strips extending along a second direction, the first light-shielding strips and the second light-shielding strips are intersected to define a plurality of sub-pixel areas, the color filter layer is arranged in the sub-pixel areas, a cross section of each first light-shielding strip perpendicular to an extending direction of the first light-shielding strip is trapezoidal, a width of a bottom, close to the transparent substrate, of the cross section is larger than a width of a top, far away from the transparent substrate, of the cross section, and a side, far away from the transparent substrate, of the color filter layer is flush with tops of the first light-shielding strips.

Document US 2017/208303 A1 discloses a display device including: a display panel including a display surface side and a back surface side, a cover panel bonded to the display surface side of the display panel by a first adhesive layer, and a touch panel bonded to the back surface side of the display panel by a second adhesive layer. The cover panel includes a translucent main portion and a frame-shaped opaque masking portion along a peripheral edge of the main portion. The masking portion includes a first region corresponding to a peripheral edge portion of the display panel, and a second region positioned outside the first region. The first adhesive layer is provided to entirely cover a gap between a region in the display panel inside the peripheral edge portion and the main portion, and to entirely cover a gap between the peripheral edge portion of the display panel and the first region.

### SUMMARY

Embodiments of the disclosure provide a method and apparatus for adjusting brightness of a projection apparatus, and a storage medium, which can improve the display effect of the image projected by the projection apparatus.

In a first aspect, an embodiment of the disclosure provides a method for adjusting brightness of a projection apparatus, which is applied to the projection apparatus. The projection apparatus has a light source and an aperture, and the light source includes a colored light source. The method includes the following operations. A target aperture diameter of the aperture corresponding to an obtained first brightness level is determined based on the first brightness level. A first drive current corresponding to the target aperture diameter is determined based on a preset first configuration mapping relationship. Here, the first configuration mapping relationship includes correspondences between aperture diameters and drive currents for driving the colored light source to enable an image projected by the projection apparatus to achieve white balance. An aperture diameter of the aperture is controlled to act to the target aperture diameter, and the colored light source is driven by using the first drive current.

In a second aspect, an embodiment of the disclosure provides an apparatus for adjusting brightness of a projection apparatus, which is applied to the projection apparatus. The projection apparatus has a light source and an aperture, and the light source includes a colored light source. The apparatus includes an aperture diameter determination module, a drive current determination module and a control module. The aperture diameter determination module is configured to determine, based on an obtained first brightness level, a target aperture diameter of the aperture corresponding to the first brightness level. The drive current determination module is configured to determine, based on a preset first configuration mapping relationship, a first drive current corresponding to the target aperture diameter. The first configuration mapping relationship includes correspondences between aperture diameters and drive currents for driving the colored light source to enable an image projected by the projection apparatus to achieve white balance. The control module is configured to control an aperture diameter of the aperture to act to the target aperture diameter, and drive the colored light source by using the first drive current.

In a third aspect, an embodiment of the disclosure provides a projection apparatus including a light source, an aperture, a memory, and a processor. The light source includes a colored light source. The memory has stored thereon computer program instructions. The processor, when executing the computer program instructions, implements the method for adjusting brightness of the projection apparatus in the first aspect.

In a fourth aspect, an embodiment of the disclosure provides a computer-readable storage medium having stored thereon computer program instructions that, when executed by a processor, implement the method for adjusting brightness of the projection apparatus in the first aspect.

The embodiments of the disclosure provide a method and apparatus for adjusting brightness of a projection apparatus, and a storage medium. According to the obtained first brightness level, the target aperture diameter, to which the aperture of the projection apparatus should be adjusted, may be determined. Based on the first configuration mapping relationship, which includes the correspondences between the aperture diameters and the drive currents that can drive the colored light source to enable the image projected by the projection apparatus to achieve the white balance, the first drive current corresponding to the target aperture diameter, which may enable the image projected by the projection apparatus to achieve the white balance, may be determined. The aperture diameter of the aperture is controlled to act to the target aperture diameter, and the colored light source is driven by using the first drive current, such that light emitted by the colored light source driven by using the first drive current may achieve the white balance after passing through the aperture with the target aperture diameter, and the brightness corresponding to the first brightness level may be ensured. In this way, the color deviation of the image projected by the projection apparatus is reduced or even eliminated, and the display effect of the image projected by the projection apparatus is improved.

### BRIEF DESCRIPTION OF THE DRAWINGS

To illustrate the technical solutions of the embodiments of the disclosure more clearly, drawings to be used in the embodiments of the disclosure will be briefly introduced in the following. For those of ordinary skill in the art, other drawings may be obtained according to these drawings without creative labor.
FIG. 1 is a flowchart of a method for adjusting brightness of a projection apparatus provided by an embodiment of the disclosure.
FIG. 2 is a flowchart of a method for adjusting brightness of a projection apparatus provided by another embodiment of the disclosure.
FIG. 3 is a flowchart of a method for adjusting brightness of a projection apparatus provided by yet another embodiment of the disclosure.
FIG. 4 is a flowchart of a method for adjusting brightness of a projection apparatus provided by still yet another embodiment of the disclosure.
FIG. 5 is a schematic diagram of a structure of an apparatus for adjusting brightness of a projection apparatus provided by an embodiment of the disclosure.
FIG. 6 is a schematic diagram of a structure of an apparatus for adjusting brightness of a projection apparatus provided by another embodiment of the disclosure.
FIG. 7 is a schematic diagram of a structure of an apparatus for adjusting brightness of a projection apparatus provided by yet another embodiment of the disclosure.
FIG. 8 is a schematic diagram of a structure of a projection apparatus provided by an embodiment of the disclosure.

### DETAILED DESCRIPTION

In the following, features in various aspects and exemplary embodiments of the disclosure will be described in detail. In order to make the objectives, technical solutions, and advantages of the disclosure clearer, the disclosure is further described in detail with reference to the drawings and specific embodiments in the following. It is to be understood that the specific embodiments described here are for interpreting the disclosure only and are not intended to limit the disclosure. For those skilled in the art, the disclosure may be implemented without some of the specific details. The following description of the embodiments is only intended to provide a better understanding of the disclosure by showing examples of the disclosure.

A projection apparatus is a device that may project images or videos onto a screen and may be widely used in various places. Since different places have different ambient brightness, in order to ensure that the brightness of the projection image projected by the projection apparatus meets requirements, a brightness adjustment operation may be performed on the projection apparatus to adjust the brightness of the projection image. However, in actual operations, it has been found that after the brightness of the projection apparatus is adjusted, color deviation may occur in the projection image projected by the projection apparatus, which degrades the display effect of the projection image of the projection apparatus.

For ease of illustration, part of the structure of the projection apparatus is briefly illustrated. The projection apparatus has a light source and an aperture. The light source may provide light for the projection device, and may include a colored light source and a white light source. The colored light source may provide colored light. For example, the colored light source may include a red (i.e., R) lamp body, a green (i.e., G) lamp body and a blue (i.e., B) lamp body. The white light source may provide white light. For example, the white light source may include a BP lamp body. The aperture is located between the light source and the lens of the projection apparatus. Light emitted by the light source may pass through the aperture, and the light output of the aperture may be controlled by adjusting the diameter of the aperture. When the projected image should be a bright image, the aperture diameter may be enlarged to increase luminous flux; and when the projected image should be a dim image, the aperture diameter may be reduced to decrease the luminous flux.

The disclosure provides a method and apparatus for adjusting brightness of a projection apparatus, and a storage medium. The aperture diameter, which the aperture in the projection apparatus should achieve, may be determined according to the brightness level required for the projection apparatus. In addition to adjusting the aperture diameter of the aperture, a drive current driving the colored light source may further be provided. The drive current may enable the image projected by the projection apparatus with the adjusted aperture diameter to achieve the white balance, which reduces or even eliminates color deviation, and thereby improves the display effect of the projection image of the projection apparatus.

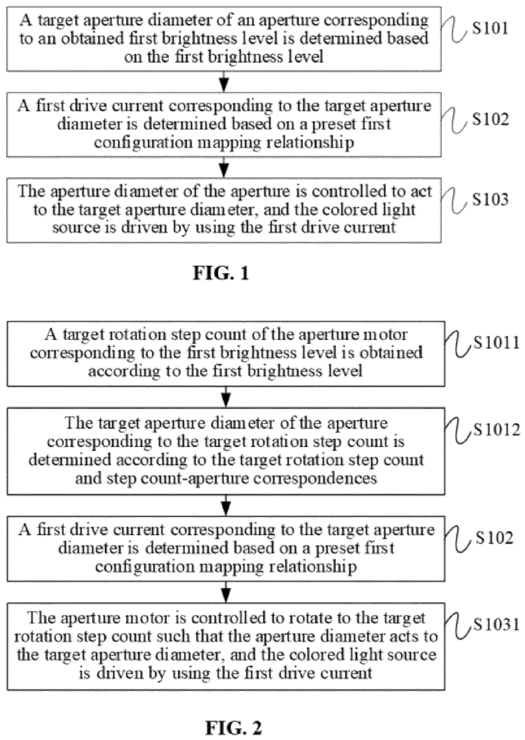

In a first aspect, the disclosure provides a method for adjusting brightness of a projection apparatus. The method may be applied to the projection apparatus. Related descriptions of the projection apparatus may be referred to the above, which will not be repeated here. The method for adjusting brightness of the projection apparatus may be performed by an apparatus for adjusting brightness of the projection apparatus, which is not limited here. FIG. 1 is a flowchart of a method for adjusting brightness of a projection apparatus provided by an embodiment of the disclosure. As shown in FIG. 1, the method for adjusting brightness of the projection apparatus may include operations S101 to S103.

In operation S101, a target aperture diameter of an aperture corresponding to an obtained first brightness level is determined based on the first brightness level.

The first brightness level is a brightness level obtained by the projection apparatus, which needs to be adopted. There is a correspondence between the brightness level and the aperture diameter of the aperture. The higher the brightness level is, the larger the aperture diameter is, and the brighter the image projected by the projection apparatus is. The target aperture diameter is the aperture diameter corresponding to the first brightness level.

In operation S102, a first drive current corresponding to the target aperture diameter is determined based on a preset first configuration mapping relationship.

The first configuration mapping relationship includes correspondences between the aperture diameters and drive currents for driving a colored light source to enable the image projected by the projection apparatus to achieve white balance. When the aperture diameter changes, the luminous flux passing through the aperture also changes. A color deviation phenomenon will occur after the colored light emitted by the colored light source passes through the aperture. In case of the white balance, a white object may be restored to be white, and the color deviation may be reduced or even eliminated through the white balance. The first configuration mapping relationship includes the correspondences between the aperture diameters and the drive currents driving the colored light source, which may eliminate the color deviation. The first configuration mapping relationship may be implemented in a form of a mapping table, a mapping graph, or the like, which is not limited here. The first drive current is the drive current corresponding to the target aperture diameter in the first configuration mapping relationship.

For example, Table 1 shows exemplary correspondences between the aperture diameters and the drive currents.

**Table 1**

| aperture diameter (F/#) | drive current |
|---|---|
| 1.7122 | a1 |
| 1.7535 | a2 |
| 1.7998 | a3 |
| 1.8523 | a4 |
| 1.9127 | a5 |
| 1.9831 | a6 |
| 2.0666 | a7 |
| 2.1678 | a8 |
| 2.2936 | a9 |
| 2.4597 | a10 |
| 2.6687 | a11 |
| 2.9351 | a12 |
| 3.0358 | a13 |

The drive currents a1 to a13 in Table 1 may be of different drive current values.

In operation S103, the aperture diameter of the aperture is controlled to act to the target aperture diameter, and the colored light source 6i6s6 driven by using the first drive current.

The aperture diameter of the aperture is controlled to enlarge or reduce to the target aperture diameter, and the colored light source is driven by using the first drive current to enable the colored light emitted by the colored light source to reduce or eliminate the color deviation after mixing and passing through the aperture, such that the color deviation of the image projected by the projection apparatus is reduced or eliminated.

When the colored light source includes multiple colored light sources with different colors, the first drive current may be a total drive current of the multiple colored light sources with different colors, or the first drive current may include drive currents corresponding to respective ones of the multiple colored light sources with different colors.

In the embodiments of the disclosure, according to the obtained first brightness level, the target aperture diameter, to which the aperture of the projection apparatus should be adjusted, may be determined. Based on the first configuration mapping relationship, which includes the correspondences between the aperture diameters and the drive currents that may drive the colored light source to enable the image projected by the projection apparatus to achieve the white balance, the first drive current corresponding to the target aperture diameter, which may enable the image projected by the projection apparatus to achieve the white balance, may be determined. The aperture diameter of the aperture is controlled to act to the target aperture diameter, and the colored light source is driven by using the first drive current, such that light emitted by the colored light source driven by using the first drive current may achieve the white balance after passing through the aperture with the target aperture diameter, and the brightness corresponding to the first brightness level may be ensured. In this way, the color deviation of the image projected by the projection apparatus is reduced or even eliminated, and the display effect of the image projected by the projection apparatus is improved.

The display effect of the projection apparatus adjusted using the method for adjusting brightness of the projection apparatus provided by the embodiment of the disclosure is improved, and stability of the brightness of the projection image is also good. For example, Table 2 shows the brightness of the image projected by the projection apparatus in three tests using the method for adjusting brightness of the projection apparatus provided by the embodiment of the disclosure.

**Table 2**

| brightness level | projection brightness of the first test | projection brightness of the second test | projection brightness of the third test |
|---|---|---|---|
| 1 | 395 | 388 | 400 |
| 2 | 461 | 450 | 460 |
| 3 | 517 | 502 | 512 |
| 4 | 648 | 646 | 621 |
| 5 | 673 | 684 | 642 |
| 6 | 750 | 760 | 768 |
| 7 | 1114 | 1104 | 1040 |
| 8 | 1326 | 1284 | 1281 |
| 9 | 1515 | 1511 | 1480 |
| 10 | 1882 | 1883 | 1883 |

Here, the projection brightness of the first test includes the brightness of the image projected by the projection apparatus at each of different brightness levels in the first test, the projection brightness of the second test includes the brightness of the image projected by the projection apparatus at each of different brightness levels in the second test, and the projection brightness of the third test includes the brightness of the image projected by the projection apparatus at each of different brightness levels in the third test. As can be seen from Table 2, the brightness of the image projected by the projection apparatus at the same brightness level in different tests is relatively close, and a good stability may be maintained.

In some examples, the above first brightness level may be obtained based on manual adjustment input. Specifically, the projection apparatus may receive manual adjustment input from a user and determine the first brightness level based on the manual adjustment input from the user.

In some other examples, the first brightness level may be obtained based on ambient brightness matching. Specifically, the projection apparatus may acquire the current ambient brightness. The projection apparatus has a correspondence between the ambient brightness and the brightness level, and the correspondence records brightness levels that match with the ambient brightness. The brightness level that matches with the current ambient brightness, i.e., the first brightness level, may be looked up in the correspondence.

The maximum brightness level of brightness levels matches with the maximum aperture diameter, and the minimum brightness level of the brightness levels matches with the minimum aperture diameter. An aperture diameter corresponding to a brightness level between the maximum brightness level and the minimum brightness level is greater than the minimum aperture diameter and less than the maximum aperture diameter. The aperture diameter may be represented as a percentage of the aperture diameter to the maximum aperture diameter, or as a multiple of the minimum aperture diameter. A control interface may be set for controlling the aperture diameter of the aperture according to brightness units. Aperture diameters corresponding to the maximum brightness level, the minimum brightness level, and brightness levels between the maximum brightness level and the minimum brightness level are required to ensure that the brightness of the image projected by the projection apparatus meets the requirements.

In some embodiments, the projection apparatus further includes an aperture motor, which may control the aperture diameter of the aperture to enlarge or reduce. FIG. 2 is a flowchart of a method for adjusting brightness of a projection apparatus provided by another embodiment of the disclosure. The difference between FIG. 2 and FIG. 1 is that the operation S101 in FIG. 1 may be specifically refined into operations S1011 and S1012 in FIG. 2, and the operation S103 in FIG. 1 may be specifically refined into operation S1031 in FIG. 2.

In operation S1011, a target rotation step count of the aperture motor corresponding to the first brightness level is obtained according to the first brightness level.

There are correspondences between the brightness levels and the rotation step counts of the aperture motor. Different brightness levels correspond to different rotation step counts of the aperture motor. The target rotation step count is the rotation step count corresponding to the first brightness level.

In operation S1012, the target aperture diameter of the aperture corresponding to the target rotation step count is determined according to the target rotation step count and step count-aperture correspondences.

Rotation of the aperture motor may control the aperture diameter of the aperture to change. Different rotation step counts of the aperture motor correspondingly control the aperture to enlarge or reduce to different aperture diameters. The step count-aperture correspondences include correspondences between the rotation step counts of the aperture motor and the aperture diameters of the aperture. The target aperture diameter is the aperture diameter corresponding to the target rotation step count in the step count-aperture correspondences.

In some examples, the brightness level is positively correlated with the rotation step count of the aperture motor, and the aperture diameter is positively correlated with the rotation step count of the aperture motor. The higher the brightness level is, the higher the rotation step count of the aperture motor is, the larger the aperture diameter is, and the higher the brightness of the image projected by the projection apparatus is. Similarly, the lower the brightness level is, the lower the rotation step count of the aperture motor is, the smaller the aperture diameter is, and the lower the brightness of the image projected by the projection apparatus is.

For example, Table 3 shows exemplary correspondences among the brightness levels, the rotation step counts of the aperture motor, and the aperture diameters of the aperture.

**Table 3**

| brightness level | fine-tuning rotation step count | coarse-tuning rotation step count | aperture diameter (F/#) |
|---|---|---|---|
| 1 | 512 | 16 | 1.7122 |
| 2 | 544 | 17 | 1.7535 |
| 3 | 576 | 18 | 1.7998 |
| 4 | 608 | 19 | 1.8523 |
| 5 | 640 | 20 | 1.9127 |
| 6 | 672 | 21 | 1.9831 |
| 7 | 704 | 22 | 2.0666 |
| 8 | 736 | 23 | 2.1678 |
| 9 | 768 | 24 | 2.2936 |
| 10 | 800 | 25 | 2.4597 |
| 11 | 832 | 26 | 2.6687 |
| 12 | 864 | 27 | 2.9351 |
| 13 | 896 | 28 | 3.0358 |

In Table 3, the fine-tuning rotation step count is the rotation step count in a fine-tuning mode, and the coarse-tuning rotation step count is the rotation step count in a coarse-tuning mode. In Table 3, the fine-tuning rotation step count = the coarse-tuning rotation step count x 32. As the brightness level rises, the fine-tuning rotation step count, the coarse-tuning rotation step count, and the aperture diameter increase. If the brightness levels are more finely divided, the rotation step counts and the aperture diameters in Table 3 may be used to fit a graph that may represent the step count-aperture correspondences, and aperture diameters corresponding to other rotation step counts not recorded in Table 3 may be obtained by the graph.

In operation S1031, the aperture motor is controlled to rotate to the target rotation step count such that the aperture diameter acts to the target aperture diameter, and the colored light source is driven by using the first drive current.

When the first brightness level is determined, the aperture motor may be controlled to rotate to the target rotation step count. The aperture motor drives the aperture, such that the aperture diameter of the aperture also enlarges or reduces to the target aperture diameter. In addition to controlling the aperture motor to rotate, the colored light source is driven by using the first drive current, such that the colored light emitted by the colored light source driven by using the first drive current passes through the aperture with the target aperture diameter. The color deviation phenomenon of the colored light passing through the aperture is reduced or eliminated, such that the color deviation of the image projected by the projection apparatus is reduced or even eliminated, and the display effect is improved.

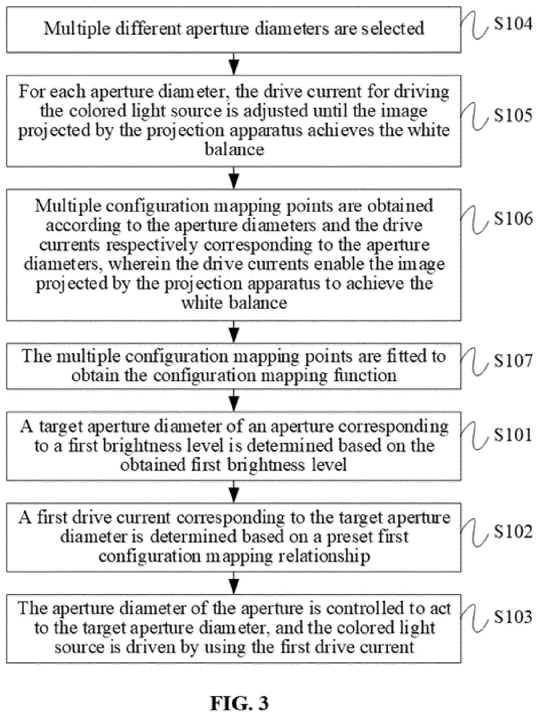

In some embodiments, the first configuration mapping relationship may include a configuration mapping function. The configuration mapping function may represent a continuous correspondence between the aperture diameter and the drive current for driving the colored light source to enable the image projected by the projection apparatus to achieve the white balance. The configuration mapping function may be constructed through drive currents obtained by adjustment at different aperture diameters, which may enable the image projected by the projection apparatus to achieve the white balance. The specific implementation of the configuration mapping function is not limited here. For example, the configuration mapping function may be implemented as a smooth graph that may represent the correspondence between the aperture diameter and the drive current for driving the colored light source to enable the image projected by the projection apparatus to achieve the white balance. FIG. 3 is a flowchart of a method for adjusting brightness of a projection apparatus provided by yet another embodiment of the disclosure. The difference between FIG. 3 and FIG. 1 is that the method for adjusting brightness of the projection apparatus shown in FIG. 3 may further include operations S104 to S107.

In operation S104, multiple different aperture diameters are selected.

In some examples, the maximum aperture diameter, the minimum aperture diameter, and at least one aperture diameter between the maximum and minimum aperture diameters may be selected. The specific values and number of the selected aperture diameters are not limited here.

In operation S105, for each aperture diameter, the drive current for driving the colored light source is adjusted until the image projected by the projection apparatus achieves the white balance.

The aperture may be controlled to act to each aperture diameter in sequence, for example, the aperture may be moved to each aperture diameter by controlling the rotation step count of the aperture motor. For each aperture diameter of the aperture, the drive current driving the colored light source may be adjusted, either from high to low or from low to high. When the image projected by the projection apparatus achieves the white balance, the drive current of the colored light source is recorded.

In operation S106, multiple configuration mapping points are obtained according to each aperture diameter and the drive current corresponding to the aperture diameter, which enables the image projected by the projection apparatus to achieve the white balance.

The aperture diameter may be taken as the horizontal ordinate, and the drive current, which enables the image projected by the projection apparatus to achieve the white balance at the aperture diameter, may be taken as the longitudinal coordinate, so as to obtain a corresponding configuration mapping point. Alternatively, the aperture diameter may be taken as the longitudinal ordinate, and the drive current, which enables the image projected by the projection apparatus to achieve the white balance at the aperture diameter, may be taken as the horizontal coordinate, so as to obtain a corresponding configuration mapping point. Each aperture diameter corresponds to a configuration mapping point, and multiple configuration mapping points may be obtained by multiple aperture diameters.

In operation S107, the multiple configuration mapping points are fitted to obtain a configuration mapping function.

By fitting, coordinates of multiple configuration mapping points may be used to calculate the configuration mapping function. In some examples, the multiple configuration mapping points may be connected by a smooth graph, which is the configuration mapping graph corresponding to the configuration mapping function. Any aperture diameter is taken as the input value of the configuration mapping function, and the drive current corresponding to the aperture diameter may be obtained through the configuration mapping function. In the above embodiments, the configuration mapping function may be used to determine the first drive current.

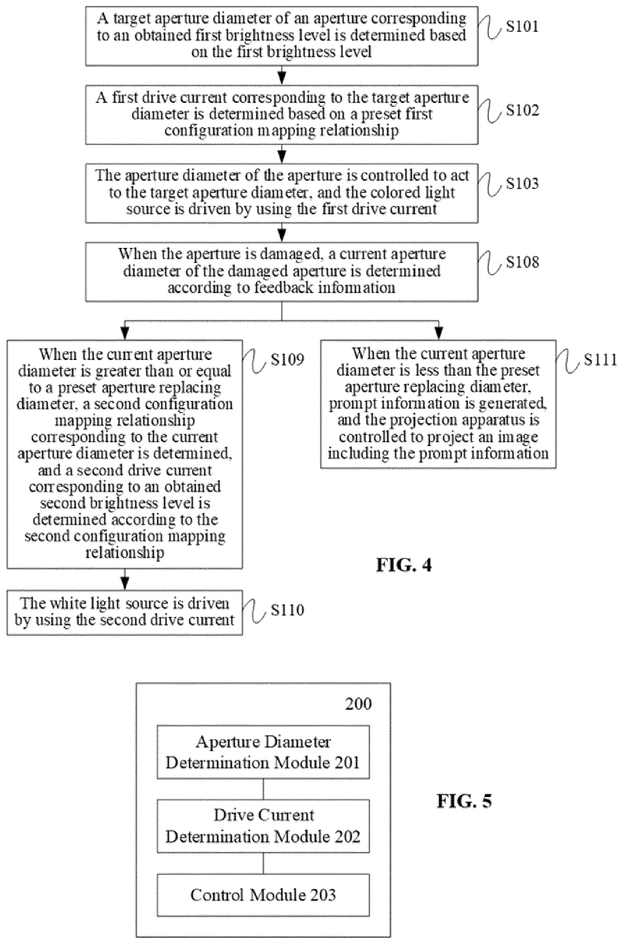

In some embodiments, the aperture in the projection apparatus may be damaged after being used for multiple times, and is unable to enlarge or reduce. In such case, the white light source may be driven by a second drive current for driving the white light source in the projection apparatus, so as to ensure the brightness of the image projected by the projection apparatus. FIG. 4 is a flowchart of a method for adjusting brightness of a projection apparatus provided by still yet another embodiment of the disclosure. The difference between FIG. 4 and FIG. 1 is that the method for adjusting brightness of the projection apparatus shown in FIG. 4 may further include operations S108 to S111.

In operation S108, when the aperture is damaged, a current aperture diameter of the damaged aperture is determined according to feedback information.

Adjustment of the aperture diameter is performed by the aperture motor. The aperture motor provides feedback information after executing instructions. The feedback information may represent the rotation step count of the aperture motor, and thereby represent the current aperture diameter corresponding to the rotation step count. Alternatively, the feedback information may directly represent the current aperture diameter of the aperture. When the aperture is damaged, the aperture motor also cannot rotate, i.e., the aperture motor stays at a fixed rotation step count. Correspondingly, the feedback information represents the rotation step count for which the aperture motor stays, and thereby represents the current aperture diameter of the damaged aperture. Alternatively, the feedback information directly represents the current aperture diameter of the damaged aperture.

In operation S109, when the current aperture diameter is greater than or equal to a preset aperture replacing diameter, a second configuration mapping relationship corresponding to the current aperture diameter is determined, and a second drive current corresponding to an obtained second brightness level is determined according to the second configuration mapping relationship.

The aperture replacing diameter is a diameter threshold for determining whether the aperture needs to be replaced, and may be set according to scenarios, requirements, experience, or the like, which is not limited here. If the aperture diameter of the aperture is greater than or equal to the aperture replacing diameter, the aperture does not need to be replaced, and the projection apparatus can still be used. If the aperture diameter of the aperture is less than the aperture replacing diameter, the aperture needs to be replaced, otherwise the projection apparatus cannot be used normally any more.

Each aperture diameter corresponds to a second configuration mapping relationship, and different aperture diameters may correspond to different second configuration mapping relationships respectively. The second configuration mapping relationship includes a correspondence between the brightness level and the drive current for driving the white light source to enable the brightness of the image projected by the projection apparatus to achieve preset standard required brightness. The standard required brightness may be a visually suitable brightness for users at the brightness level, and may be set according to scenarios, requirements, experience, or the like, which is not limited here. The second configuration mapping relationship may be implemented in a form of a mapping table, a mapping graph, or the like. The second brightness level is a brightness level that the projection apparatus currently needs to adopt. The second brightness level may be obtained based on manual adjustment input or obtained based on ambient brightness matching, and the specific content may be referred to the related illustration regarding the first brightness level in the above embodiments, which will not be repeated here. The second drive current is a drive current for driving the white light source, which corresponds to the second brightness level in the second configuration mapping relationship.

In some examples, the second configuration mapping relationship may be established in advance. Multiple aperture diameters that greater than or equal to the aperture replacing diameter may be selected. For each aperture diameter, multiple brightness levels are selected. For each brightness level, the drive current for driving the white light source is adjusted until the brightness of the image projected by the projection apparatus achieves the standard required brightness. The correspondence between the drive current and the brightness level when the brightness of the image projected by the projection apparatus achieves the standard required brightness is recorded. The correspondences between respective brightness levels and the drive currents, which may enable the brightness of the image projected by the projection apparatus to achieve the standard required brightness, at the same aperture diameter may be combined to obtain the second configuration mapping relationship corresponding to each aperture diameter. The second configuration mapping relationship may be implemented as a brightness-current mapping function. Each brightness level and the drive current, which may enable the brightness of the image projected by the projection apparatus to achieve the standard required brightness, at the same aperture diameter may be taken as a brightness-current configuration point. Multiple brightness-current configuration points obtained at the same aperture diameter may be fitted to obtain the brightness-current mapping function representing the second configuration mapping relationship. The second drive current corresponding to the second brightness level may be calculated by the brightness-current mapping function. In some examples, the implementation of the brightness-current mapping function is not limited here. For example, the brightness-current mapping function may be implemented as a smooth brightness-current mapping graph that may represent the second configuration mapping relationship.

In operation S110, the white light source is driven by using the second drive current.

The white light emitted by the white light source driven by using the second drive current passes through the damaged aperture, such that the brightness of the image projected by the projection apparatus can achieve the standard required brightness. In this way, the brightness of the image projected by the projection apparatus is ensured, such that the projection apparatus may be normally used when the aperture is damaged, to ensure the display effect of the image projected by the projection apparatus when the aperture is damaged.

In operation S111, when the current aperture diameter is less than the preset aperture replacing diameter, prompt information is generated, and the projection apparatus is controlled to project an image including the prompt information.

If the aperture diameter is less than the aperture replacing diameter, it indicates that the aperture diameter of the damaged aperture is small, and even if the drive current is adjusted, it is difficult to enable the brightness of the image projected by the projection apparatus to achieve the standard required brightness. The prompt information is used to prompt to replace the aperture. The prompt information may be displayed in the projected image to prompt the user to replace the aperture.

In a second aspect, the disclosure provides an apparatus for adjusting brightness of a projection apparatus, which may be applied to the projection apparatus. Related descriptions of the projection apparatus may be referred to the specific explanations in the above embodiments, which will not be repeated here. FIG. 5 is a schematic diagram of a structure of an apparatus for adjusting brightness of a projection apparatus provided by an embodiment of the disclosure. As shown in FIG. 5, the brightness adjustment apparatus 200 of the projection apparatus may include an aperture diameter determination module 201, a drive current determination module 202, and a control module 203.

The aperture diameter determination module 201 may be configured to determine, based on an obtained first brightness level, a target aperture diameter of an aperture corresponding to the first brightness level.

The drive current determination module 202 may be configured to determine, based on a preset first configuration mapping relationship, a first drive current corresponding to the target aperture diameter.

The first configuration mapping relationship includes correspondences between aperture diameters and drive currents for driving the colored light source to enable an image projected by the projection apparatus to achieve white balance.

The control module 203 may be configured to control an aperture diameter of the aperture to act to the target aperture diameter, and drive the colored light source by using the first drive current.

In the embodiments of the disclosure, according to the obtained first brightness level, the target aperture diameter, to which the aperture of the projection apparatus should be adjusted, may be determined. Based on the first configuration mapping relationship, which includes the correspondences between the aperture diameters and the drive currents that may drive the colored light source to enable the image projected by the projection apparatus to achieve the white balance, the first drive current corresponding to the target aperture diameter, which may enable the image projected by the projection apparatus to achieve the white balance, may be determined. The aperture diameter of the aperture is controlled to act to the target aperture diameter, and the colored light source is driven by using the first drive current, such that light emitted by the colored light source driven by using the first drive current may achieve the white balance after passing through the aperture with the target aperture diameter, and the brightness corresponding to the first brightness level may be ensured. In this way, the color deviation of the image projected by the projection apparatus is reduced or even eliminated, and the display effect of the image projected by the projection apparatus is improved.

In some examples, the first brightness level is obtained based on manual adjustment input or obtained based on ambient brightness matching. The maximum brightness level of brightness levels matches with the maximum aperture diameter, and the minimum brightness level of the brightness levels matches with the minimum aperture diameter.

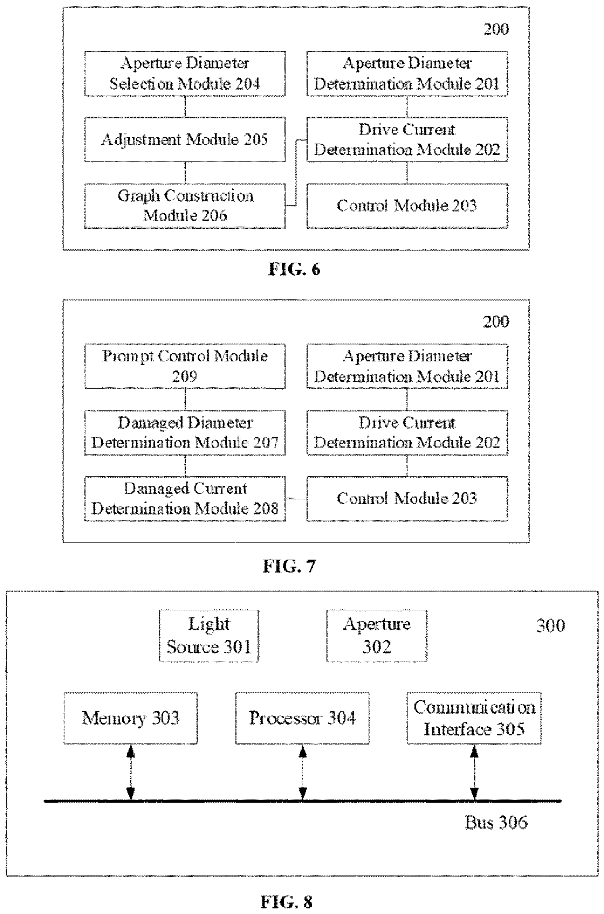

In some embodiments, the first configuration mapping relationship includes a configuration mapping function. FIG. 6 is a schematic diagram of a structure of an apparatus for adjusting brightness of a projection apparatus provided by another embodiment of the disclosure. The difference between FIG. 6 and FIG. 5 is that the apparatus 200 for adjusting brightness of the projection apparatus shown in FIG. 6 may further include an aperture diameter selection module 204, an adjustment module 205, and a graph construction module 206.

The aperture diameter selection module 204 may be configured to select multiple different aperture diameters.

The adjustment module 205 may be configured to adjust, for each aperture diameter, the drive current for driving the colored light source until the image projected by the projection apparatus achieves the white balance.

The graph construction module 206 may be configured to obtain multiple configuration mapping points according to respective aperture diameters and the drive currents respectively corresponding to the aperture diameters, that enable the image projected by the projection apparatus to achieve the white balance; and fit the multiple configuration mapping points to obtain the configuration mapping function.

In some embodiments, the projection apparatus further includes an aperture motor.

The above aperture diameter determination module 201 may specifically be configured to: obtain, according to the first brightness level, a target rotation step count of the aperture motor corresponding to the first brightness level; and determine the target aperture diameter of the aperture corresponding to the target rotation step count according to the target rotation step count and step count-aperture correspondences. The step count-aperture correspondences include correspondences between the rotation step counts of the aperture motor and the aperture diameters of the aperture.

In some examples, the brightness level is positively correlated with the rotation step count of the aperture motor, and the aperture diameter is positively correlated with the rotation step count of the aperture motor.

In some examples, the light source further includes a white light source. FIG. 7 is a schematic diagram of a structure of an apparatus for adjusting brightness of a projection apparatus provided by yet another embodiment of the disclosure. The difference between FIG. 7 and FIG. 5 is that the brightness adjustment apparatus 200 of the projection apparatus may further include a damaged diameter determination module 207, a damaged current determination module 208, and a prompt control module 209.

The damaged diameter determination module 207 may be configured to determine, when the aperture is damaged, a current aperture diameter of the damaged aperture according to feedback information.

The damaged current determination module 208 may be configured to: when the current aperture diameter is greater than or equal to a preset aperture replacing diameter, determine a second configuration mapping relationship corresponding to the current aperture diameter, and determine a second drive current corresponding to an obtained second brightness level according to the second configuration mapping relationship.

The second configuration mapping relationship includes correspondences between the brightness levels and drive currents for driving the white light source to enable brightness of the image projected by the projection apparatus to achieve preset standard required brightness.

The above control module 203 may further be configured to drive the white light source by using the second drive current.

The prompt control module 209 may be configured to: when the current aperture diameter is less than the preset aperture replacing diameter, generate prompt information, and control the projection apparatus to project an image including the prompt information. The prompt information is used to prompt to replace the aperture.

In a third aspect, the disclosure further provides a projection device. FIG. 8 is a schematic diagram of a structure of a projection apparatus provided by an embodiment of the disclosure. As shown in FIG. 8, the projection apparatus 300 may include a light source 301, an aperture 302, a memory 303, and a processor 304.

The memory 303 has stored thereon computer program instructions that may be run on the processor 304.

In some examples, the above processor 304 may include a Central Processing Unit (CPU), or an Application Specific Integrated Circuit (ASIC), or may be configured as one or more integrated circuits implementing the embodiments of the disclosure.

The memory 303 may include a Read-Only Memory (ROM), a Random Access Memory (RAM), a magnetic disk storage medium device, an optical storage medium device, a flash memory device, or an electrical, optical or other physical/tangible memory storage device. Therefore, generally, the memory includes one or more tangible (non-transitory) computer-readable storage media (e.g., memory devices) encoded with software including computer executable instructions, and when the software is executed (e.g., by one or more processors), it may be operated to perform operations described with reference to the method for adjusting brightness of the projection apparatus in the embodiments of the disclosure.

The processor 304 reads the executable program codes stored in the memory 303 to run the computer program corresponding to the executable program codes, so as to implement the method for adjusting brightness of the projection apparatus in the above embodiments.

In some examples, the projection apparatus 300 may further include a communication interface 305 and a bus 306. As shown in FIG. 8, the memory 303, the processor 304, and the communication interface 305 are connected through the bus 306 to complete communication between each other.

The communication interface 305 is mainly used to implement communication between various modules, apparatuses, units, and/or devices in the embodiments of the disclosure. An input device and/or an output device may also be accessed through the communication interface 305.

The bus 306 includes hardware, software, or both, and couples the components of the projection apparatus 300 together. For example, the bus 306 may include an Accelerated Graphics Port (AGP) or other graphics buses, an Enhanced Industry Standard Architecture (EISA) bus, a Front Side Bus (FSB), Hyper Transport (HT) interconnect, an Industrial Standard Architecture (ISA) bus, infinity bandwidth interconnect, a Low Pin Count (LPC) bus, a memory bus, a Micro Channel Architecture (MCA) bus, a Peripheral Component Interconnect (PCI) bus, a PCI-Express (PCI-E) bus, a Serial Advanced Technology Attachment (SATA) bus, a Video Electronics Standards Association Local Bus (VLB), or other suitable buses or a combination of two or more of the above, but is not limited thereto. When appropriate, the bus 306 may include one or more buses. Although specific buses are described and shown in the embodiments of the disclosure, any suitable bus or interconnect is considered by the disclosure.

In a fourth aspect, the disclosure further provides a computer-readable storage medium. The computer-readable storage medium has stored thereon computer program instructions. When executed by a processor, the computer program instructions may implement the method for adjusting brightness of the projection apparatus in the above embodiments and may achieve the same technical effects, which will not be repeated here for avoiding repetition. The above computer-readable storage medium may include a non-transitory computer-readable storage medium, such as a Read-Only Memory (ROM), a Random Access Memory (RAM), a magnetic disk, an optical disc, or the like, which is not limited here.

An embodiment of the disclosure provides a computer program product. Instructions in the computer program product, when executed by a processor of an electronic device, enable the electronic device to perform the method for adjusting brightness of the projection apparatus in the above embodiments and achieve the same technical effects, which will not be repeated here for avoiding repetition.

It is to be clarified that the various embodiments in the specification are described in a progressive manner. The same or similar parts of the various embodiments may be referred to each other, and each embodiment focuses on differences from other embodiments. For apparatus embodiments, projection apparatus embodiments, computer-readable storage medium embodiments and computer program product embodiments, the related parts may be referred to the illustration of the method embodiments. The disclosure is not limited to the specific operations and structures described above and shown in the figures. Those skilled in the art may make various changes, modifications, and additions based on the spirit of the disclosure, or change the order of operations. In addition, for the sake of brevity, detailed description of known method techniques is omitted here.

Various aspects of the disclosure are described above with reference to the flowcharts and/or block diagrams of the methods, apparatus (systems), and computer program products of the embodiments of the disclosure. It is to be understood that each block in the flowcharts and/or block diagrams, as well as a combination of blocks in the flowcharts and/or block diagrams, may be implemented by computer program instructions. These computer program instructions may be provided to a processor of a general-purpose computer, a special-purpose computer, or other programmable data processing apparatuses to produce a machine, such that the instructions executed by the processor of the computer or other programmable data processing apparatuses enable functions/actions specified in one or more blocks of the flowcharts and/or block diagrams to be implemented. Such processor may be, but is not limited to, a general-purpose processor, a special-purpose processor, an application-specific processor, or a field-programmable logic circuit. It is further to be understood that each block in the block diagrams and/or flowcharts, as well as a combination of blocks in the block diagrams and/or flowcharts, may be implemented by dedicated hardware performing specified functions/actions, or by a combination of dedicated hardware and computer instructions.

Those skilled in the art should understand that the above embodiments are exemplary and not restrictive. Different technical features appearing in different embodiments may be combined to achieve beneficial effects. Based on the study of the drawings, the specification and the claims, those skilled in the art should be able to understand and implement embodiments with other changes to the disclosed embodiments. In the claims, the term "comprise" does not exclude other apparatuses or operations; the numeral "a" does not exclude plurality; and the terms "first" and "second" are used for identifying names and not for indicating any particular order. Any reference numeral in the claims shall not be understood as a limitation on the scope of protection. Functions of multiple parts in the claims may be implemented by a single hardware or software module. The presence of some technical features in different dependent claims does not mean that these technical features cannot be combined to obtain beneficial effects.

## Claims

1. A method for adjusting brightness of a projection apparatus, applied to the projection apparatus, wherein the projection apparatus has a light source and an aperture, the light source comprises a colored light source, and the method comprises:
determining (S101), based on an obtained first brightness level, a target aperture diameter of the aperture corresponding to the first brightness level;
**characterized in that** the method further comprises:
determining (S102), based on a preset first configuration mapping relationship, a first drive current corresponding to the target aperture diameter, wherein the first configuration mapping relationship comprises correspondences between aperture diameters and drive currents for driving the colored light source to enable an image projected by the projection apparatus to achieve white balance; and
controlling (S103) an aperture diameter of the aperture to act to the target aperture diameter, and driving the colored light source by using the first drive current.

2. The method of claim 1, wherein the first configuration mapping relationship comprises a configuration mapping function,
and before determining (S102), based on the preset first configuration mapping relationship, the first drive current corresponding to the target aperture diameter, the method further comprises:
selecting (S104) a plurality of different aperture diameters;
adjusting (S105), for each aperture diameter of the plurality of different aperture diameters, the drive current for driving the colored light source until the image projected by the projection apparatus achieves the white balance;
obtaining (S106) a plurality of configuration mapping points according to the aperture diameters and the drive currents respectively corresponding to the aperture diameters, wherein the drive currents enable the image projected by the projection apparatus to achieve the white balance; and
fitting (S107) the plurality of configuration mapping points to obtain the configuration mapping function.

3. The method of claim 1, wherein the projection apparatus further comprises an aperture motor;
wherein determining (S101), based on the obtained first brightness level, the target aperture diameter of the aperture corresponding to the first brightness level comprises:
obtaining (S1011), according to the first brightness level, a target rotation step count of the aperture motor corresponding to the first brightness level; and
determining (S1012) the target aperture diameter of the aperture corresponding to the target rotation step count according to the target rotation step count and step count-aperture correspondences, wherein the step count-aperture correspondences comprise correspondences between rotation step counts of the aperture motor and the aperture diameters of the aperture.

4. The method of claim 3, wherein a brightness level is positively correlated with the rotation step count of the aperture motor, and the aperture diameter is positively correlated with the rotation step count of the aperture motor.

5. The method of claim 1, wherein
the first brightness level is obtained based on manual adjustment input or obtained based on ambient brightness matching; and
a maximum brightness level of a plurality of brightness levels matches with a maximum aperture diameter, and a minimum brightness level of the plurality of brightness levels matches with a minimum aperture diameter.

6. The method of claim 1, wherein the light source further comprises a white light source, and the method further comprises:
determining (S108), when the aperture is damaged, a current aperture diameter of the damaged aperture according to feedback information;
when the current aperture diameter is greater than or equal to a preset aperture replacing diameter, determining (S109) a second configuration mapping relationship corresponding to the current aperture diameter, and determining a second drive current corresponding to an obtained second brightness level according to the second configuration mapping relationship; wherein the preset aperture replacing diameter is a diameter threshold for determining whether the aperture needs to be replaced, and the second configuration mapping relationship comprises correspondences between brightness levels and drive currents for driving the white light source to enable brightness of the image projected by the projection apparatus to achieve preset standard required brightness; and
driving the white light source by using the second drive current.

7. The method of claim 6, further comprising:
when the current aperture diameter is less than the preset aperture replacing diameter, generating (S111) prompt information, and controlling the projection apparatus to project an image comprising the prompt information; wherein the prompt information is used to prompt to replace the aperture.

8. The method of claim 6, wherein respective brightness levels and drive currents corresponding to the respective bright levels at a same aperture diameter are taken as a plurality of brightness-current configuration points, wherein the drive currents enable the brightness of the image projected by the projection apparatus to achieve the preset standard required brightness, and the plurality of brightness-current configuration points obtained at the same aperture diameter are fitted to obtain the brightness-current mapping function representing the second configuration mapping relationship.

9. The method of claim 6, wherein the feedback information represents a rotation step count for which the aperture motor for the damaged aperture stays, or the feedback information directly represents the current aperture diameter of the damaged aperture.

10. A projection apparatus, comprising:
a light source comprising a colored light source;
an aperture;
a memory having stored thereon computer program instructions; and
a processor is configured to execute the computer program instructions to implement the method for adjusting brightness of the projection apparatus of any one of claims 1 to 9.

11. A computer-readable storage medium having stored thereon computer program instructions that, when executed by a processor, implement the method for adjusting brightness of the projection apparatus of any one of claims 1 to 9.

## Patentansprüche

1. Ein Verfahren zum Einstellen der Helligkeit einer Projektionsvorrichtung, das auf die Projektionsvorrichtung angewendet wird, wobei die Projektionsvorrichtung eine Lichtquelle und eine Blende aufweist, die Lichtquelle eine farbige Lichtquelle umfasst und das Verfahren Folgendes umfasst:
bestimmen (S101) eines dem ersten Helligkeitspegel entsprechenden Sollblendendurchmessers der Blende auf der Grundlage eines ermittelten ersten Helligkeitspegels;
**dadurch gekennzeichnet, dass** das Verfahren ferner Folgendes umfasst:
bestimmen (S102), auf Grundlage einer voreingestellten ersten Konfigurationszuordnungsbeziehung, eines ersten Ansteuerstroms, der dem Sollblendendurchmesser entspricht, wobei die erste Konfigurationszuordnungsbeziehung Korrespondenzen zwischen Blendendurchmessern und Ansteuerströmen zum Ansteuern der farbigen Lichtquelle umfasst, um zu ermöglichen, dass ein von der Projektionsvorrichtung projiziertes Bild einen Weißabgleich erreicht; und
steuern (S103) eines Blendendurchmessers der Blende so, dass er dem Sollblendendurchmesser entspricht, und ansteuern der farbigen Lichtquelle unter Verwendung des ersten Ansteuerstroms.

2. Das Verfahren von Anspruch 1, wobei die erste Konfigurationszuordnungsbeziehung eine Konfigurationszuordnungsfunktion umfasst,
und vor dem Bestimmen (S102), auf Grundlage der voreingestellten ersten Konfigurationszuordnungsbeziehung, des ersten Ansteuerstroms, der dem Sollblendendurchmesser entspricht, umfasst das Verfahren ferner:
auswählen (S104) einer Vielzahl von unterschiedlichen Blendendurchmessern;
einstellen (S105) des Ansteuerstroms zum Ansteuern der farbigen Lichtquelle für jeden Blendendurchmesser aus der Vielzahl von verschiedenen Blendendurchmessern, bis das von der Projektionsvorrichtung projizierte Bild den Weißabgleich erreicht;
erhalten (S106) einer Vielzahl von Konfigurationszuordnungspunkten gemäß den Blendendurchmessern und den Ansteuerströmen, die jeweils den Blendendurchmessern entsprechen, wobei die Ansteuerströme ermöglichen, dass das von der Projektionsvorrichtung projizierte Bild den Weißabgleich erreicht; und
anpassen (S107) der Vielzahl von Konfigurationszuordnungspunkten, um die Konfigurationszuordnungsfunktion zu erhalten.

3. Das Verfahren von Anspruch 1, wobei die Projektionsvorrichtung ferner einen Blendemotor umfasst;
wobei das Bestimmen (S101), auf Grundlage des erhaltenen ersten Helligkeitspegels, des Sollblendendurchmessers der Blende, die dem ersten Helligkeitspegel entspricht, Folgendes umfasst:
erhalten (S1011), gemäß dem ersten Helligkeitspegel, einer Solldrehschrittzahl des Blendemotors, die dem ersten Helligkeitspegel entspricht; und
bestimmen (S1012) des Sollblendendurchmessers der Blende, der der Solldrehschrittzahl entspricht, gemäß der Solldrehschrittzahl und Schrittzahl-Blenden-Zuordnungen, wobei die Schrittzahl-Blenden-Zuordnungen Zuordnungen zwischen Drehschrittzahlen des Blendenmotors und den Blendendurchmessern der Blende umfassen.

4. Das Verfahren von Anspruch 3, wobei ein Helligkeitspegel positiv mit der Drehschrittzahl des Blendemotors korreliert ist und der Blendendurchmesser positiv mit der Drehschrittzahl des Blendemotors korreliert ist.

5. Das Verfahren von Anspruch 1, wobei
der erste Helligkeitspegel auf Grundlage einer manuellen Einstelleingabe oder auf der Grundlage einer Anpassung an die Umgebungshelligkeit ermittelt wird; und
ein maximaler Helligkeitspegel einer Vielzahl von Helligkeitspegeln mit einem maximalen Blendendurchmesser übereinstimmt und ein minimaler Helligkeitspegel aus der Vielzahl von Helligkeitspegeln mit einem minimalen Blendendurchmesser übereinstimmt.

6. Das Verfahren von Anspruch 1, wobei die Lichtquelle ferner eine Weißlichtquelle umfasst und das Verfahren ferner Folgendes umfasst:
bestimmen (S108), wenn die Blende beschädigt ist, eines aktuellen Blendendurchmessers der beschädigten Blende gemäß Rückmeldeinformationen;
wenn der aktuelle Blendendurchmesser größer oder gleich einem voreingestellten Ersetzungsdurchmesser für die Blende ist, bestimmen (S109) einer zweiten Konfigurationszuordnungsbeziehung, die dem aktuellen Blendendurchmesser entspricht, und bestimmen eines zweiten Ansteuerstroms, der einem erhaltenen zweiten Helligkeitspegel gemäß der zweiten Konfigurationszuordnungsbeziehung entspricht; wobei der voreingestellte Ersetzungsdurchmesser für die Blende ein Durchmesserschwellenwert zum Bestimmen ist, ob die Blende ersetzt werden muss, und die zweite Konfigurationszuordnungsbeziehung Korrespondenzen zwischen Helligkeitspegeln und Ansteuerströmen zum Ansteuern der Weißlichtquelle umfasst, damit die Helligkeit des von der Projektionsvorrichtung projizierten Bildes eine voreingestellte, gemäß dem Standard erforderliche Helligkeit erreicht; und
ansteuern der Weißlichtquelle unter Verwendung des zweiten Ansteuerstroms.

7. Das Verfahren von Anspruch 6, ferner umfassend:
wenn der aktuelle Blendendurchmesser kleiner als der voreingestellte Ersetzungsdurchmesser für die Blende ist, erzeugen (S111) von Hinweisinformationen und steuern der Projektionsvorrichtung, um ein Bild zu projizieren, das die Hinweisinformationen enthält; wobei die Hinweisinformationen dazu verwendet werden, zum Austausch der Blende aufzufordern.

8. Das Verfahren von Anspruch 6, wobei jeweilige Helligkeitspegel und Ansteuerströme, die den jeweiligen Helligkeitspegeln bei einem gleichen Blendendurchmesser entsprechen, als eine Vielzahl von Helligkeit-Strom-Konfigurationspunkten genommen werden, wobei die Ansteuerströme es ermöglichen, dass die Helligkeit des durch die Projektionsvorrichtung projizierten Bildes die voreingestellte, gemäß dem Standard erforderliche Helligkeit erreicht, und die bei dem gleichen Blendendurchmesser erhaltene Vielzahl von Helligkeit-Strom-Konfigurationspunkten angepasst wird, um die Helligkeits-Strom-Zuordnungsfunktion zu erhalten, die die zweite Konfigurationszuordnungsbeziehung darstellt.

9. Das Verfahren von Anspruch 6, wobei die Rückmeldeinformationen eine Drehschrittzahl darstellen, für die der Blendemotor für die beschädigte Blende verbleibt, oder die Rückmeldeinformationen unmittelbar den aktuellen Blendendurchmesser der beschädigten Blende darstellen.

10. Eine Projektionsvorrichtung, umfassend:
eine Lichtquelle, die eine farbige Lichtquelle umfasst;
eine Blende;
einen Speicher, auf dem Computerprogrammanweisungen gespeichert sind; und
ein Prozessor dazu konfiguriert ist, die Computerprogrammanweisungen auszuführen, um das Verfahren zum Einstellen der Helligkeit der Projektionsvorrichtung von einem der Ansprüche 1 bis 9 zu implementieren.

11. Ein computerlesbares Speichermedium, auf dem Computerprogrammanweisungen gespeichert sind, die, wenn sie von einem Prozessor ausgeführt werden, das Verfahren zum Einstellen der Helligkeit der Projektionsvorrichtung von einem der Ansprüche 1 bis 9 implementieren.

## Revendications

1. Un procédé de réglage de la luminosité d'un appareil de projection, appliqué à l'appareil de projection, dans lequel l'appareil de projection a une source de lumière et une ouverture de diaphragme, la source de lumière comprend une source de lumière colorée, et le procédé comprend :
déterminer (S101), sur la base d'un premier niveau de luminosité obtenu, un diamètre d'ouverture de diaphragme cible de l'ouverture de diaphragme correspondant au premier niveau de luminosité ;
**caractérisé en ce que** le procédé comprend en outre :
déterminer (S102), sur la base d'une première relation de correspondance de configuration prédéfinie, un premier courant de pilotage correspondant au diamètre d'ouverture de diaphragme cible, dans lequel la première relation de mise en correspondance de configuration comprend des correspondances entre les diamètres d'ouverture de diaphragme et des courants de pilotage destinés à piloter la source de lumière colorée afin de permettre à une image projetée par l'appareil de projection d'atteindre la balance des blancs ; et
contrôler (S103) un diamètre de l'ouverture de diaphragme afin de le faire correspondre au diamètre d'ouverture de diaphragme cible, et piloter la source de lumière colorée à l'aide du premier courant de pilotage.

2. Le procédé de la revendication 1, dans lequel la première relation de mise en correspondance de configuration comprend une fonction de mise en correspondance de configuration,
et avant de déterminer (S102), sur la base de la première relation de mise en correspondance de configuration prédéfinie, le premier courant de pilotage correspondant au diamètre d'ouverture de diaphragme cible, le procédé comprend en outre :
sélectionner (S104) une pluralité de diamètres d'ouverture de diaphragme différents ;
ajuster (S105), pour chaque diamètre d'ouverture de diaphragme de la pluralité de diamètres d'ouverture de diaphragme différents, le courant de pilotage pour piloter la source de lumière colorée jusqu'à ce que l'image projetée par l'appareil de projection atteigne la balance des blancs ;
obtenir (S106) une pluralité de points de mise en correspondance de configuration selon les diamètres d'ouverture de diaphragme et les courants de pilotage correspondant respectivement aux diamètres d'ouverture de diaphragme, dans lequel les courants de pilotage permettent à l'image projetée par l'appareil de projection d'atteindre la balance des blancs ; et
ajuster (S107) la pluralité de points de mise en correspondance de configuration pour obtenir la fonction de mise en correspondance de configuration.

3. Le procédé de la revendication 1, dans lequel l'appareil de projection comprend en outre un moteur d'ouverture de diaphragme ;
dans lequel déterminer (S101), sur la base du premier niveau de luminosité obtenu, le diamètre d'ouverture de diaphragme cible de l'ouverture de diaphragme correspondant au premier niveau de luminosité comprend :
obtenir (S1011), selon le premier niveau de luminosité, un nombre cible de pas de rotation du moteur d'ouverture de diaphragme correspondant au premier niveau de luminosité ; et
déterminer (S1012) le diamètre d'ouverture de diaphragme cible de l'ouverture de diaphragme correspondant au nombre cible de pas de rotation en fonction du nombre cible de pas de rotation et des correspondances entre le nombre de pas et l'ouverture de diaphragme, dans lequel les correspondances entre le nombre de pas et l'ouverture de diaphragme comprennent des correspondances entre les nombres de pas de rotation du moteur d'ouverture de diaphragme et les diamètres d'ouverture de diaphragme de l'ouverture de diaphragme.

4. Le procédé de la revendication 3, dans lequel un niveau de luminosité est positivement corrélé avec le nombre de pas de rotation du moteur d'ouverture de diaphragme, et le diamètre d'ouverture de diaphragme est positivement corrélé avec le nombre de pas de rotation du moteur d'ouverture de diaphragme.

5. Le procédé de la revendication 1, dans lequel
le premier niveau de luminosité est obtenu sur la base d'une commande de réglage manuel ou obtenu sur la base d'une adaptation à la luminosité ambiante ; et
un niveau de luminosité maximum d'une pluralité de niveaux de luminosité correspond à un diamètre d'ouverture de diaphragme maximum, et un niveau de luminosité minimum de la pluralité de niveaux de luminosité correspond à un diamètre d'ouverture de diaphragme minimum.

6. Le procédé de la revendication 1, dans lequel la source de lumière comprend en outre une source de lumière blanche, et le procédé comprend en outre :
déterminer (S108), lorsque l'ouverture de diaphragme est endommagée, un diamètre d'ouverture de diaphragme actuel de l'ouverture de diaphragme endommagée en fonction des informations de rétroaction ;
lorsque le diamètre d'ouverture de diaphragme actuel est supérieur ou égal à un diamètre de remplacement d'ouverture de diaphragme prédéfini, déterminer (S109) une deuxième relation de mise en correspondance de configuration correspondant au diamètre d'ouverture de diaphragme actuel, et déterminer un deuxième courant de pilotage correspondant à un deuxième niveau de luminosité obtenu selon la deuxième relation de mise en correspondance de configuration ; dans lequel le diamètre de remplacement d'ouverture de diaphragme prédéfini est un seuil de diamètre pour déterminer si l'ouverture de diaphragme doit être remplacée, et la deuxième relation de mise en correspondance de configuration comprend des correspondances entre les niveaux de luminosité et les courants de pilotage pour piloter la source de lumière blanche pour permettre à la luminosité de l'image projetée par l'appareil de projection d'atteindre la luminosité standard requise prédéfinie ; et
piloter la source de lumière blanche en utilisant le deuxième courant de pilotage.

7. Le procédé de la revendication 6 comprenant en outre :
lorsque le diamètre d'ouverture de diaphragme actuel est inférieur au diamètre de remplacement d'ouverture de diaphragme prédéfini, générer (S111) des informations d'invite, et commander l'appareil de projection pour projeter une image comprenant les informations d'invite ; dans lequel les informations d'invite sont utilisées pour inviter à remplacer l'ouverture de diaphragme.

8. Le procédé de la revendication 6, dans lequel les niveaux de luminosité respectifs et les courants de pilotage correspondant aux niveaux de luminosité respectifs à un même diamètre d'ouverture de diaphragme sont pris comme une pluralité de points de configuration de luminosité-courant, dans lequel les courants de pilotage permettent à la luminosité de l'image projetée par l'appareil de projection d'atteindre la luminosité standard requise prédéfinie, et la pluralité de points de configuration de luminosité-courant obtenus au même diamètre d'ouverture de diaphragme sont ajustés pour obtenir la fonction de mise en correspondance de luminosité-courant représentant la deuxième relation de mise en correspondance de configuration.

9. Le procédé de la revendication 6, dans lequel les informations de rétroaction représentent un nombre de pas de rotation auquel reste bloqué le moteur de l'ouverture de diaphragme de l'ouverture de diaphragme endommagée, ou les informations de rétroaction représentent directement le diamètre actuel d'ouverture de diaphragme de l'ouverture de diaphragme endommagée.

10. Un appareil de projection, comprenant :
une source de lumière comprenant une source de lumière colorée ;
une ouverture de diaphragme ;
une mémoire sur laquelle sont stockées des instructions de programme informatique ; et
un processeur est configuré pour exécuter les instructions de programme informatique pour mettre en œuvre le procédé de réglage de la luminosité de l'appareil de projection de l'une quelconque des revendications 1 à 9.

11. Un support de stockage lisible par ordinateur sur lequel sont stockées des instructions de programme informatique qui, lorsqu'elles sont exécutées par un processeur, mettent en œuvre le procédé de réglage de la luminosité de l'appareil de projection de l'une quelconque des revendications 1 à 9.
